Europäisches Patentamt

European Patent Office

Office européen des brevets

(11) Publication number: **0 122 714**
**B1**

(12) **EUROPEAN PATENT SPECIFICATION**

(45) Date of publication of patent specification: **28.10.87**

(21) Application number: **84301667.6**

(22) Date of filing: **13.03.84**

(51) Int. Cl.⁴: **H 05 B 37/00,** B 60 Q 1/14

(54) **Dim-dip headlight circuit.**

(30) Priority: **15.04.83 GB 8310209**

(43) Date of publication of application:
**24.10.84 Bulletin 84/43**

(45) Publication of the grant of the patent:
**28.10.87 Bulletin 87/44**

(84) Designated Contracting States:
**BE DE FR GB IT NL SE**

(56) References cited:
**US-A-1 964 562**
**US-A-2 372 438**
**US-A-3 447 029**

(73) Proprietor: **LEYLAND VEHICLES LIMITED**
**Lancaster House**
**Leyland Preston PR5 1SN Lancashire (GB)**

(72) Inventor: **Jones, Martin E.**
**40 Church Walk Euxton**
**Chorley Lancs.PR7 6HL (GB)**

(74) Representative: **Rock, Olaf Colin et al**
**Rover Group Patent and Trade Marke**
**Department Cowley Body Plant**
**Cowley Oxford OX4 5NL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an electric circuit for vehicle headlights enabling a "dim-dip" mode of operation.

It has been proposed that in addition to a main beam headlight, a dipped beam headlight and side-lights or parking lights, a vehicle should have a "dim-dip" beam. This "dim-dip" beam would be provided by the existing dipped beam headlights, but at a reduced power of perhaps 50% or 67% of full power. Several methods of adapting the existing vehicle circuitry have been proposed to achieve this effect, by introducing series resistances or by "chopping", but suffer from unacceptably wide tolerances in the output power during "dim-dip" operation.

According to the present invention, an electric circuit for supplying reduced power to a vehicle headlight comprises an alternator having multiple phase outputs, and is characterized by one or more diodes connected in the same sense in parallel between respective alternator phase outputs and a common output junction, the number of phase outputs connected to the common junction being less than the total number of phase outputs available from the alternator, a line for connecting the output junction to the headlight, and a switch in series in the connecting line. Thus the alternator is used additionally to provide, on demand, a reduced power output to the headlight, which is preferably the dipped-beam headlight.

Not all the phases of the alternator are used; a suitable combination of one or more phases is used to provide to the headlight an accurate proportion of the maximum power which is provided during conventional dipped-beam or main beam operation by way of an independent circuit.

The switch is preferably operated automatically to close whenever the vehicle side-lights are on. In the preferred embodiment, this is achieved by a relay switch, energized when the side-lights are powered. It is also preferable than the dipped-beam is extinguished when the vehicle main beam is energized; the "dim-dip" power supply to the dipped-beam is therefore preferably switched off automatically when the main beam is energized. In the preferred embodiment, the relay switch is connected to be controlled by both the main beam circuit and the side-light circuit so that when both are energized the relay switch is open, but when only the side-light circuit is energized the relay switch is closed, supplying "dim-dip" power.

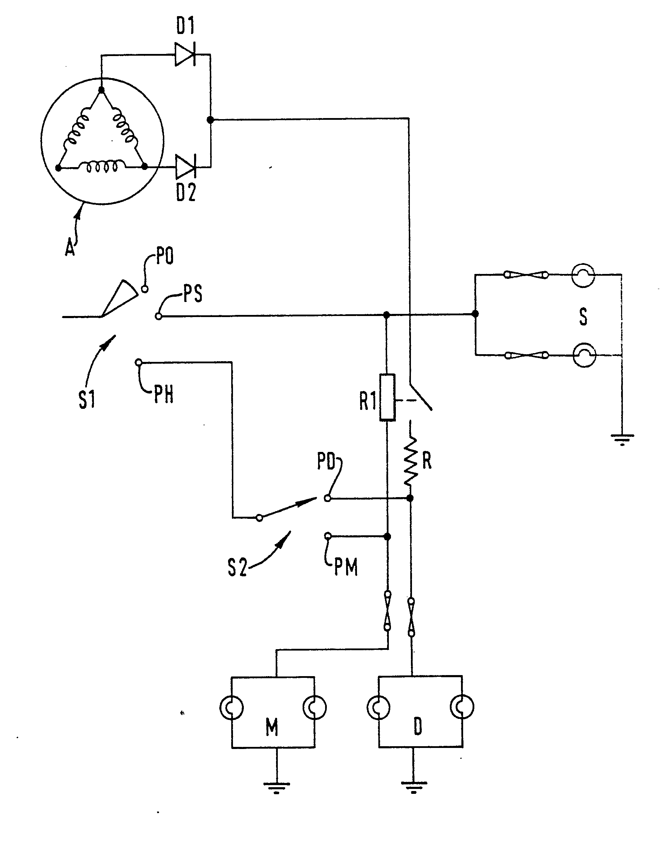

The preferred embodiment of the invention will now be described with reference to the accompanying drawing which is a partial circuit diagram of the vehicle lighting circuit.

Switch S1 controls the supply of power to side-lights S, via terminal PS, or sidelights and headlights together, via terminals PS and PH. With switch S1 at terminal PO, all lights are switched off. Switch S2 selects either a main beam filament M, via terminal PM, a dipped beam filament D, via terminal PD, to be energized when switch S1 is at terminals PS and PH. An independent circuit supplies reduced power to the dipped beam filament D from just two phases of a vehicle alternator A, by way of diodes D1, D2 connected in parallel between respective alternator output terminals and a common junction, and a connecting line. Because just two of the three phases are summed, for the so-called "dim-dip" mode of lighting, the power is reduced to approximately 67% of the full available power. Clearly other combinations of phases are possible, by selecting and summing one or more phases of any multiple phase alternator, but not using all of the phase outputs. Where one phase only is used, diode D2 would be unnecessary.

It may be found necessary to incorporate a resistor R in series in the connecting line, in order to attenuate the output to the dipped beam filament for "dim-dip" operation. The degree of attenuation provided by resistor R will still be substantially smaller than that introduced by using fewer than the maximum number of alternator phase outputs. Thus the advantage of the invention of avoiding wide tolerances in the dim-dip power is still present.

A relay switch R1 controls the supply of "dim-dip" power to the dipped beam filament D. The relay switch R1 is controlled by a winding connected in both the sidelight S supply circuit and the main beam M supply circuit. When just the sidelights S are on, the relay R1 sees the supply voltage at only one side, and closes thus energizing the "dim-dip" beam. When both the sidelights and the main beam are on, the relay sees the supply voltage at both sides and opens the switch, turning the "dim-dip" beam off. When the dipped beam D is turned on by switches S1 and S2, the full power is supplied to the dipped beam filament and the "dim-dip" supply does not have to be disconnected since it is effectively overridden.

The relay switch thus ensures that the "dim-dip" beam is on whenever the sidelights are on without full headlights, except when the engine is off for parking. Moreover, the "dim-dip" is extinguished when the main beam is on, avoiding excessive heat build-up.

## Claims

1. An electric circuit supplying reduced power to a vehicle headlight (D), comprising an alternator (A) having multiple phase outputs, and characterized by one or more diodes (D1, D2) connected in the same sense in parallel between respective alternator phase outputs and a common output junction, the number of phase outputs connected to the common junction being less than the total number of phase outputs available from the alternator, a line for connecting the output junction to the headlight, and a switch (R1) in series in the connecting line.

2. A circuit in accordance with Claim 1, wherein the switch (R1) is controlled automatically to close in response to the energization of the vehicle's sidelights.

3. A circuit in accordance with Claim 2, wherein the switch (R1) is controlled automatically to open in response to the energization of a main beam headlight (M).

4. A circuit in accordance with Claim 3, wherein the switch (R1) is operated by a relay connected in the circuits supplying power to the sidelights (S) and to the main beam headlights (M).

5. A circuit in accordance with Claim 4, wherein the relay (R1) is connected between the power supply (PS) to the sidelights and the power supply (PM) to the main beam headlight (M), such that the relay opens the switch in response to the main beam energization.

6. A circuit in accordance with any of Claims 1 to 5, wherein the alternator (A) has three phase outputs, only one of which is connected via a diode (D1) to the said common junction.

7. A circuit in accordance with any of Claims 1 to 5, wherein the alternator (A) has three phase outputs, only two of which are connected via two respective similarly-poled diodes (D1, D2) to the said common junction.

8. A vehicle having a sidelight (S) and a headlight (M, D), and characterized by an electrical circuit according to any preceding claim.

**Patentansprüche**

1. Elektrische Schaltung, die einem Fahrzeugscheinwerfer (D) reduzierte Energie zuführt, mit einer Wechselstromlichtmaschine (A) mit Mehrphasenausgängen, gekennzeichnet durch eine oder mehrere Dioden (D1, D2), die in gleicher Ausrichtung zwischen entsprechenden Wechselstromlichtmaschinen-Phasenausgängen und einem gemeinsamen Ausgangsanschluß parallel geschaltet sind, wobei die Anzahl der mit dem gemeinsamen Anschluß verbundenen Phasenausgänge geringer ist als die Gesamtanzahl der von der Wechselstromlichtmaschine zur Verfügung stehenden Phasenausgänge, durch eine Leitung zum Verbinden des Ausgangsanschlusses mit dem Scheinwerfer, und durch einen in der Verbindungsleitung in Reihe geschalteten Schalter (R1).

2. Schaltung nach Anspruch 1, dadurch gekennzeichnet, daß der Schalter (R1) derart automatisch gesteuert wird, daß er sich ansprechend auf die Erregung der Fahrzeug-Begrenzungsleuchten schließt.

3. Schaltung nach Anspruch 2, dadurch gekennzeichnet, daß der Schalter (R1) derart automatisch gesteuert wird, daß er sich ansprechend auf die Erregung eines Fernlicht-Scheinwerfers (M) öffnet.

4. Schaltung nach Anspruch 3, dadurch gekennzeichnet, daß der Schalter (R1) durch ein Relais betätigt wird, das in die den Begrenzungsleuchten (S) und den Fernlicht-Schweinwerfen (M) Energie zuführenden Schaltungen eingeschaltet ist.

5. Schaltung nach Anspruch 4, dadurch gekennzeichnet, daß das Relais (R1) derart zwischen die Energiezufuhr (PS) zu den Begrenzungsleuchten und die Energiezufuhr (PM) zu dem Fernlicht-Scheinwerfer (M) geschaltet ist, daß das Relais den Schalter ansprechend auf die Fernlicht-Erregung öffnet.

6. Schaltung nach einem der Ansprüche 1 bis 5, dadurch gekennzeichnet, daß die Wechselstromlichtmaschine (A) drei Phasenausgänge aufweist, von denen nur einer über eine Diode (D1) mit dem genannten gemeinsamen Anschluß verbunden ist.

7. Schaltung nach einem der Ansprüche 1 bis 5, dadurch gekennzeichnet, daß die Wechselstromlichtmaschine (A) drei Phasenausgänge aufweist, von denen nur zwei über zwei entsprechende gleichartig gepolte Dioden (D1, D2) mit dem genannten gemeinsamen Anschluß verbunden sind.

8. Fahrzeug mit einer Begrenzungsleuchte (S) und einem Scheinwerfer (M, D), gekennzeichnet durch eine elektrische Schaltung nach einem der vorausgehenden Ansprüche.

**Revendications**

1. Circuit électrique fournissant un courant réduit à un feu de croisement (D) de véhicule, comportant un alternateur (A) à multiples sorties de phases, et caractérisé par une ou plusieurs diodes (D1, D2) montées dans le même sens en parallèle entre les sorties correspondantes de phases de l'alternateur et une jonction commune de sorties, le nombre de sorties de phases reliées à la jonction commune étant inférieur au nombre total de sorties de phases disponibles sur l'alternateur, une ligne pour relier la jonction de sorties au feu de croisement, et un interrupteur (R1) en série sur la ligne de liaison.

2. Circuit selon la revendication 1, dans lequel l'interrupteur (R1) est commandé automatiquement pour se fermer en réponse à la mise sous tension des feux de position du véhicule.

3. Circuit selon la revendication 2, dans lequel l'interrupteur (R1) est commandé automatiquement pour s'ouvrir en réponse à la mise sous tension d'un feu de route (M).

4. Circuit selon la revendication 3, dans lequel l'interrupteur (R1) est actionné par un relais monté sur les circuits fournissant du courant aux feux de position (S) et aux feux de route (M).

5. Circuit selon la revendication 4, dans lequel le relais (R1) est monté entre la source (PS) de courant pour les feux de position et la source (PM) de courant pour le feu de route, de façon que le relais ouvre l'interrupteur en réponse à la mise sous tension du feu de route.

6. Circuit selon l'une quelconque des revendications 1 à 5, dans lequel l'alternateur (A) a trois sorties de phases dont une seule est reliée, via und diode (D1), à ladite jonction commune.

7. Circuit selon l'une quelconque des revendications 1 à 5, dans lequel l'alternateur (A) a trois sorties de phases dont seulement deux sont reliées, via deux diodes correspondantes (D1, D2) polarisées de laçon similaire, à ladite jonction commune.

8. Véhicule ayant un feu de position (S) et un feu (M, D) et caractérisé par un circuit électrique selon l'une quelconque des revendications précédentes.